# EUROPEAN PATENT APPLICATION

(11) **EP 4 636 789 A1**
(43) Date of publication of application: **22.10.2025**
(21) Application number: 23903526.4
(22) Date of filing: 13.12.2023
(51) Int. Cl.: H01F 1/053, C08K 3/04, C08K 3/28, C08K 5/10, C08K 7/06, C08L 77/00, C08L 77/12, H01F 1/055, H01F 1/059

(54) **COMPOSITION FOR BONDED MAGNET, BONDED MAGNET, AND INTEGRALLY MOLDED COMPONENT**

(30) Priority: 14.12.2022 JP 2022199208
(71) Applicant: Sumitomo Metal Mining Co., Ltd., Tokyo 105-8716 (JP); Mabuchi Motor Co., Ltd., Matsudo-shi, Chiba 270-2280 (JP)
(72) Inventor: MATSUDA, Hideki, Iwanai-gun, Hokkaido 048-2143 (JP); KONISHI, Hiroto, Iwanai-gun, Hokkaido 048-2143 (JP); MURAOKA, Kenji, Tokyo 105-8716 (JP); OGINO, Hisashi, Inzai-shi, Chiba 270-2393 (JP); UZAWA, Hideyuki, Inzai-shi, Chiba 270-2393 (JP)
(74) Representative: Jones, Nicholas Andrew
(86) International application number: PCT/JP2023/044562
(87) International publication number: WO 2024/128242

(57) **Abstract**

Provided is a composition for a bonded magnet, the composition having higher flowability than conventional ones while enabling the bonded magnet to retain durability and adhesion in a thermal impact test. Also provided are: a bonded magnet which is a molded object of such composition for a bonded magnet; and an integrally molded component including the bonded magnet. This composition for a bonded magnet comprises 88.0-91.0 mass% samarium-iron-nitrogen magnet powder having an average particle diameter of 1.7-2.8 um, 3.0-7.0 mass% polyamide elastomer having a tensile elongation at rupture of 400% or greater and a flexural modulus of 70 MPa or greater, 0.5-2.0 mass% carbon fibers having a fiber diameter of 5-12 µm, 0.3-1.0 mass% carboxylic acid ester, and 1.0-8.0 mass% polyamide 12 resin having, in a molecular-weight distribution examination, a weight-average molecular weight Mw of 4,500-7,500. This composition for a bonded magnet has a flowability of 1.5 cm³/sec or greater when examined using a flow tester under the conditions of a capillary temperature of 250°C, a load of 588 N, an orifice diameter 1 mm, an orifice length of 1 mm, and a preheating time of 300 seconds.

## Description

### TECHNICAL FIELD

The present invention relates to a composition for a bonded magnet, a bonded magnet, and an integrally molded component.

### BACKGROUND ART

The bonded magnet is manufactured by heat-kneading a composition including a magnet powder and a binder component, such as an organic resin, in a kneader such as an extruder, then processing the composition into a form such as a pellet or the like, and then heat-molding the composition by a method such as injection molding, compression molding, or extrusion molding.

Such a bonded magnet has an advantage over a sintered magnet in that a magnet having high dimensional accuracy and a complicated shape can be easily obtained. In addition, the bonded magnet has high uniformity in quality and performance, good yield, and good machinability. In particular, a magnet manufactured by injection molding using a thermoplastic resin such as a polyamide resin or a polyphenylene sulfide resin as the binder resin has an advantage that the manufacturing cost of the magnet can be reduced because of high dimensional accuracy and no need for post-processing. The bonded magnet containing a rare earth magnet powder has excellent magnetic properties (residual magnetic flux density Br, coercive force iHc, and maximum energy product (BH) max) and has a strong magnetic force. Therefore, the bonded magnet can promote miniaturization, can enhance characteristic features, and is useful for applications such as a small motor, a sensor, etc.

Meanwhile, in many cases, the bonded magnet is used as an integrally molded component obtained by combining the bonded magnet with a metal part. Specifically, the bonded magnet is combined with a metal part by a method such as bonding using an adhesive or insert molding to produce an integrally molded component, which is used in the form of an integrally molded component. However, the bonded magnet and the metal part have different linear expansion coefficients from each other. Therefore, when the integrally molded component is subjected to a thermal shock test, problems such as cracking of the bonded magnet or separation of the bonded magnet and the metal part due to peeling of the adhesive easily occur. Therefore, a technique has been proposed in which an additive that does not adversely affect adhesiveness, such as a polyamide elastomer or a carbon fiber, is added to the bonded magnet to impart durability against the thermal shock test.

For example, Patent Document 1 discloses a composition for a bonded magnet containing a predetermined samarium-iron-nitrogen-based magnet powder, a polyamide elastomer, a carbon fiber, a carboxylic acid ester, and a polyamide resin each in a predetermined content (claim 1 of Patent Document 1). According to the composition for a bonded magnet, fluidity during molding is good, processing by injection molding or the like is easy, the bonded magnet obtained by the composition has high durability against the thermal shock test, in which cracking does not occur, and excellent adhesiveness is imparted when the bonded magnet is bonded to a metal part or the like through an adhesive ([0015] of Patent Document 1).

Patent Document 1: Japanese Patent No. 5979733

### DISCLOSURE OF THE INVENTION

### Problems to be Solved by the Invention

The composition for a bonded magnet proposed in Patent Document 1 has a certain effect in terms of fluidity, durability against the thermal shock test, and adhesiveness, but has room for further improvement. That is, in some application of the bonded magnet, the composition for a bonded magnet may be filled into a narrow cavity portion, in which case, the fluidity of the composition is desired to be further increased. However, since the composition for a bonded magnet of Patent Document 1 contains a polyamide elastomer or a carbon fiber, there was a limitation in improving fluidity. Therefore, it was difficult to further increase the fluidity while maintaining durability against the thermal shock resistance and adhesiveness.

In view of these problems, the present inventors have conducted extensive studies. As a result, the present inventors have found that a composition for a bonded magnet, in which fluidity is further enhanced while maintaining durability against the thermal shock test and adhesiveness, can be obtained by blending a specific samarium-iron-nitrogen-based magnet powder, a carbon fiber, a carboxylic acid ester, and a polyamide resin each in a predetermined content and further blending a specific polyamide elastomer in combination.

The present invention has been completed based on such finding, and an object of the present invention is to provide a composition for a bonded magnet having higher fluidity than conventional ones while maintaining durability against the thermal shock test and adhesiveness. Another object of the present invention is to provide a bonded magnet that is a molded body of such a composition for a bonded magnet, and an integrally molded component including the bonded magnet.

### Means for Solving the Problems

The present invention includes the following aspects (1) to (5). In this specification, the expression "to" includes values at both ends thereof. That is, "X to Y" has the same meaning as "X or more and Y or less". Further, in the present specification, any combination of suitable aspects can be adopted as long as technical consistency is secured. For example, one and the other of the preferable numerical ranges can be arbitrarily combined.
(1) A composition for a bonded magnet, including:
   a samarium-iron-nitrogen-based magnet powder having an average particle size of 1.7 µm or more and 2.8 µm or less, in a content of 88.0% by mass or more and 91.0% by mass or less,
   a polyamide elastomer having a tensile elongation at break of 400% or more and a flexural modulus of 70 MPa or more, in a content of 3.0% by mass or more and 7.0% by mass or less,
   a carbon fiber having a fiber diameter of 5 µm or more and 12 µm or less, in a content of 0.5% by mass or more and 2.0% by mass or less,
   a carboxylic acid ester in a content of 0.3% by mass or more and 1.0% by mass or less; and
   a polyamide 12 resin having a weight average molecular weight Mw of 4,500 or more and 7,500 or less in a molecular weight distribution measurement, in a content of 1.0% by mass or more and 8.0% by mass or less,
   in which the composition for a bonded magnet has a fluidity of 1.5 cm³/sec or more as measured using a flow tester under conditions of a capillary temperature of 250°C, a load of 588 N, an orifice diameter of 1 mm, an orifice length of 1 mm, and a preheating time of 300 seconds.
(2) The composition for a bonded magnet as described in (1), in which the fluidity is 2.0 cm³/sec or more.
(3) The composition for a bonded magnet as described in (1) or (2), in which the samarium-iron-nitrogen-based magnet powder has a composition represented by Sm₂Fe₁₇N₃.
(4) A bonded magnet that is a molded body of the composition for a bonded magnet as described in (1) or (2).
(5) An integrally molded component including the bonded magnet as described in (4) and a metal part.

### Effects of the Invention

According to the present invention, a composition for a bonded magnet having higher fluidity than conventional ones while maintaining durability against the thermal shock test and adhesiveness is provided. In addition, a bonded magnet that is a molded body of such a composition for a bonded magnet, and an integrally molded component including the bonded magnet are provided.

### PREFERRED MODE FOR CARRYING OUT THE INVENTION

A specific embodiment of the present invention (hereinafter referred to as "the present embodiment") will be described. The present invention is not limited to the following embodiments, and various modifications can be made without departing from the scope of the present invention.

### <<1. Composition for Bonded Magnet>>

The composition for a bonded magnet of the present embodiment includes: a samarium-iron-nitrogen-based magnet powder having an average particle size of 1.7 µm or more and 2.8 µm or less, in a content of 88.0% by mass or more and 91.0% by mass or less,
a polyamide elastomer having a tensile elongation at break of 400% or more and a flexural modulus of 70 MPa or more, in a content of 3.0% by mass or more and 7.0% by mass or less,
a carbon fiber having a fiber diameter of 5 µm or more and 12 µm or less, in a content of 0.5% by mass or more and 2.0% by mass or less,
a carboxylic acid ester in a content of 0.3% by mass or more and 1.0% by mass or less; and
a polyamide 12 resin having a weight average molecular weight Mw of 4,500 or more and 7,500 or less in molecular weight distribution measurement, in a content of 1.0% by mass or more and 8.0% by mass or less.

This composition for a bonded magnet has a fluidity of 1.5 cm³/sec or more as measured using a flow tester under conditions of a capillary temperature of 250°C, a load of 588 N, an orifice diameter of 1 mm, an orifice length of 1 mm, and a preheating time of 300 seconds.

The composition for a bonded magnet (hereinafter, sometimes simply referred to as a "composition") is a precursor of a bonded magnet. That is, the composition is molded under heating by a method such as injection molding or extrusion molding to produce a bonded magnet. The bonded magnet may be anisotropic or isotropic. An anisotropic magnet can be produced by applying a magnetic field to the composition during molding, and an isotropic magnet can be obtained without applying a magnetic field during molding.

### <1> Magnet Powder

The composition for a bonded magnet of the present embodiment includes a samarium-iron-nitrogen (Sm-Fe-N; SFN)-based magnet powder (hereinafter, sometimes simply referred to as "magnet powder"). The magnet powder is a powder that is responsible for the development of magnetic characteristics in the bonded magnet. The Sm-Fe-N-based magnet powder is one type of rare earth transition metal-based magnet powder, and is known as a magnet powder having high performance and low cost. The Sm-Fe-N-based magnet powder has a basic composition represented by Sm₂Fe₁₇Nₓ, and has the maximum saturation magnetization when x=3, that is, when the composition is Sm₂Fe₁₇N₃. Therefore, the magnetic flux density of the obtained bonded magnet can be increased. Thus, the Sm-Fe-N-based magnet powder preferably has an elemental composition represented by Sm₂Fe₁₇N₃.

The Sm-Fe-N-based magnet powder has an average particle diameter of 1.7 µm or more and 2.8 µm or less. By limiting the average particle diameter to 1.7 µm or more, the fluidity and moldability of the composition can be prevented from deteriorating, and the risk of oxidation of the magnet powder and ignition accompanying the oxidation can be reduced. In addition, the Sm-Fe-N-based magnet powder has a coercivity-generating mechanism of a nucleation type. By limiting the average particle size to 2.8 µm or less, a decrease in the coercive force can be suppressed.

The average particle diameter can be determined by observing the magnet powder with a scanning electron microscope (SEM). The magnet powder may be obtained by treating the composition for a bonded magnet with a solvent such as hexafluoroisopropanol to dissolve and remove the resin, and then removing the reinforcing agent by magnetic separation. Alternatively, the magnet powder used in the production of the composition for a bonded magnet may be directly subjected to SEM observation. More specifically, the magnet powder may be treated in accordance with the method disclosed in Examples to be described later.

The composition for a bonded magnet contains the Sm-Fe-N-based magnet powder in a content of 88.0% by mass or more and 91.0% by mass or less. When the content is less than 88.0% by mass, magnetic properties of the resulting bonded magnet are low. In addition, since the resin content is high, the linear expansion coefficient of the bonded magnet is high, and as a result, cracking is likely to occur in the thermal shock test. On the other hand, when the content exceeds 91.0% by mass, the fluidity of the bonded magnet deteriorates. Thus, problems such that the bonded magnet cannot be molded or appearance defects such as a weld occur in the molded body (bonded magnet) tend to arise. The content of the Sm-Fe-N-based magnet powder is preferably 88.0% by mass or more and 90.0% by mass or less.

As a method for producing the Sm-Fe-N-based magnet powder, a method such as a melting method or a reduction diffusion method is known. The melting method includes using a metal powder containing iron (Fe) and samarium (Sm) as a raw material, and heating and melting this raw material at a temperature of 1500°C or higher, by using a furnace such as a high frequency furnace or an arc furnace. Next, the obtained product is pulverized and is further subjected to a heat treatment in order to make the composition uniform, thereby producing an Sm-Fe mother alloy. Thereafter, the obtained mother alloy is nitrided to prepare a magnet powder.

On the other hand, in the reduction diffusion method, a mixture of samarium oxide (Sm₂O₃), an iron raw material (Fe, Fe₂O₃, etc.), and a reducing agent (Ca, etc.) is heated to obtain a mother alloy, and the obtained mother alloy is nitrided to produce a magnet powder. The Sm-Fe-N-based magnet powder has a coercivity-generating mechanism of a nucleation type. In order to obtain a high coercivity, micronization thereof is desired. Therefore, it is desired to prepare a fine Sm-Fe-N-based magnet powder by a method of finely pulverizing the nitrided base alloy or using a fine raw material.

Preferably, the Sm-Fe-N-based magnet powder produced by the reduction diffusion method is used. The reduction diffusion method using an inexpensive oxide raw material (Sm₂O₃ or the like) has a feature of suppressing a raw material cost. In addition, a magnet powder having a smaller amount of impurities can be obtained compared to the melting method. On the other hand, the melting method is extremely complicated. In addition, since the product is once exposed to the air between the steps, impurities may be formed on the surface of the product by oxidation. When the product surface is oxidized, nitriding does not proceed uniformly. Accordingly, the properties of the obtained magnet powder, particularly magnetic properties such as saturation magnetization, coercive force, and/or squareness, may decrease, and the maximum energy product of the finally obtained bonded magnet may decrease.

In the reduction diffusion method, first, a samarium raw material (Sm₂O₃), an iron raw material (Fe or the like), and a reducing agent (Ca or the like) are subjected to reduction treatment to obtain a reduction product including a Sm-Fe alloy. Next, by-products (CaO, Ca(OH)₂, etc.) derived from the reducing agent contained in the reduced product are removed by a wet treatment of the reduced product. Thereafter, the obtained Sm-Fe alloy is nitrided in a mixed gas stream containing ammonia and hydrogen. The obtained nitride is pulverized and dried to obtain a Sm-Fe-N-based magnet powder.

When the Sm-Fe-N-based magnet powder is composed of a Sm₂Fe₁₇N₃-based alloy, a coarse powder is desired to be pulverized. That is, since a magnet alloy coarse powder having an average particle diameter exceeding 20 µm has low magnetic properties, the coarse powder is desired to be pulverized in an organic solvent. During pulverization or after pulverization, a coating film such as a composite phosphate coating film may be provided on the surface of the magnet powder, by putting the magnet powder into a solution containing a surface treatment agent such as phosphoric acid, and stirring the resulting solution. For pulverization, known pulverization apparatuses applicable to pulverization of magnet powders may be used. Among them, a wet pulverization apparatus such as a medium-stirring mill or a bead mill is particularly suitable because a uniform powder composition and a uniform particle size can be easily achieved. As a grinding solvent, organic solvents such as isopropyl alcohol, ethanol, toluene, methanol, and hexane are preferable. After the pulverization, filtration and drying may be performed using a filter having a predetermined opening.

The Sm-Fe-N-based magnet powder may undergo a surface treatment with a coupling agent. Examples of the coupling agent include a silane-based coupling agent, a titanium-based coupling agent, an aluminum-based coupling agent, etc. A surface treatment with a silane coupling agent is particularly preferable.

### <2> Thermoplastic Resin Binder

A composition for a bonded magnet of the present embodiment contains a polyamide elastomer and a polyamide 12 resin as the thermoplastic resin binder. The thermoplastic binder is plasticized when heated during kneading or molding and imparts fluidity to the composition. When cooled after molding, the thermoplastic binder solidifies. Therefore, the thermoplastic binder has a function of binding the magnet powder and maintaining shape-retaining ability of the bonded magnet.

### (A) Polyamide Elastomer

As a polyamide elastomer, a polyamide elastomer having a polyamide segment and a polyether segment can be used. In the composition for a bonded magnet of the present embodiment, a polyamide elastomer having a tensile elongation at break of 400% or more and a flexural modulus of 70 MPa is used. By using the polyamide elastomer having such a tensile elongation at break and a flexural modulus, the fluidity of the composition for a bonded magnet can be improved, and the occurrence of cracking in the thermal shock test can be effectively prevented. The tensile elongation at break is measured by the method specified in ISO527, and the flexural modulus is measured by the method specified in ISO178.

The content of the polyamide elastomer in the composition for a bonded magnet is 3.0% by mass or more and 7.0% by mass or less. When the content of the polyamide elastomer is within this range, the fluidity of the composition for a bonded magnet is improved, and the occurrence of cracking in the thermal shock test of the bonded magnet to be obtained can be effectively prevented.

### (B) Polyamide 12 Resin

As the polyamide resin, a polyamide 12 resin is used. In general, various polyamide resins such as polyamide 11, polyamide 6, etc. are known. However, by using the polyamide 12 resin, the fluidity of the composition for a bonded magnet can be improved, which enhances moldability. Further, by using the polyamide 12 resin, strength of the bonded magnet to be obtained can be further increased.

In the composition for a bonded magnet of the present embodiment, a polyamide 12 resin having a weight average molecular weight Mw in a range of 4,500 or more and 7,500 or less in a molecular weight distribution measurement is used. If the Mw of the polyamide 12 resin is less than 4,500, the mechanical strength of the resulting bonded magnet may decrease. On the other hand, when the Mw is more than 7,500, the fluidity of the composition for a bonded magnet may be remarkably lowered, which may make molding difficult. In order to improve the fluidity, molding at a high temperature is conceivable. In that case, the magnet powder is, however, oxidized, and it becomes difficult to obtain a bonded magnet having excellent magnetic properties. By using the polyamide 12 resin having an appropriate molecular weight, a composition for a bonded magnet having high fluidity even at a low temperature can be obtained. The molecular weight is preferably 5,000 or more and 6,000 or less. The weight average molecular weight Mw is determined by a molecular weight distribution measurement under the conditions according to Examples.

The composition for a bonded magnet preferably contains the polyamide 12 resin in a content of 1.0% by mass or more and 8.0% by mass or less. If the content is less than 1.0% by mass, the fluidity of the composition for a bonded magnet may deteriorate and molding may be difficult. On the other hand, when the content exceeds 8.0% by mass, the linear expansion coefficient of the bonded magnet becomes large, and cracking may occur in the thermal shock test. The content of the polyamide 12 resin is more preferably 1.5% by mass or more and 4.0% by mass or less.

### <3> Reinforcing Agent

The composition for a bonded magnet of the present embodiment contains a carbon fiber as a reinforcing agent. In general, various reinforcing agents such as a carbon flake and a glass fiber are known. However, by using the carbon fiber, the tensile strength of the obtained bonded magnet can be effectively increased. In the composition for a bonded magnet of the present embodiment, a carbon fiber having a fiber diameter of 5 µm or more and 12 µm or less is used. By including the carbon fiber having such a fiber diameter, the strength of the bonded magnet can be enhanced, as well as the fluidity of the composition can be enhanced, which improves the moldability. From the viewpoint of enhancing the strength, the fiber diameter of the carbon fiber is preferably 5 µm or more and 8 µm or less.

The composition for a bonded magnet includes the carbon fiber (reinforcing agent) in a content of 0.5% by mass or more and 2.0% by mass or less. If the content is less than 0.5% by mass, the strength of the bonded magnet is insufficient, and cracking may occur in the thermal shock test. On the other hand, when the content exceeds 2.0% by mass, the fluidity of the composition for a bonded magnet deteriorates, and molding of the bonded magnet may be difficult. The content of the carbon fiber is preferably 0.7% by mass or more from the viewpoint of suppressing the bonded magnet from cracking in the thermal shock test. In addition, from the viewpoint of improving fluidity, the content of the carbon fiber is preferably 1.5% by mass or less. The content of the carbon fiber is more preferably 0.7% by mass or more and 1.5% by mass or less.

### <4> Additives

The composition for a bonded magnet of the present embodiment contains a carboxylic acid ester as an additive. Examples of the carboxylic acid ester include sebacic acid ester and/or adipic acid ester. In order to enhance fluidity during molding, additives such as lubricants exemplified by hydrocarbons and fatty acids and plasticizers of various esters are generally used. However, when a carboxylic acid ester such as sebacic acid ester or adipic acid ester is used, high adhesion strength can be ensured when the obtained bonded magnet and the metal part are adhered to each other through an adhesive such as an epoxy adhesive.

The composition for a bonded magnet includes the carboxylic acid ester (additive) in a content of 0.3% by mass or more and 1.0% by mass or less. When the content is less than 0.3% by mass, sufficient adhesion strength cannot be obtained between the bonded magnet and the metal part or the like, though the mechanism of the insufficient adhesion is not clear. On the other hand, when the content exceeds 1.0% by mass, the bonded magnet may crack in the thermal shock test. From the viewpoint of improving the adhesive strength, the content of the carboxylic acid ester is preferably 0.5% by mass or more. From the viewpoint of suppressing the occurrence of cracking in the thermal shock test, the content of the carboxylic acid ester is preferably 0.8% by mass or less. The content of the carboxylic acid ester is more preferably 0.5% by mass or more and 0.8% by mass or less.

### <5> Other Components

The composition for a bonded magnet of the present embodiment may only include a magnet powder, a polyamide elastomer, a polyamide 12 resin, a carbon fiber, and a carboxylic acid ester, or may include another component. Examples of the other component include antioxidants, stabilizers, pigments, and/or compatibilizers. The composition for a bonded magnet may include these components as necessary within a range in which the effects thereof are not impaired.

### <6> Fluidity

The composition for a bonded magnet of the present embodiment has a fluidity of 1.5 cm³/sec or more. Here, the fluidity is a value measured using a flow tester under conditions of a capillary temperature of 250°C, a load of 588 N, an orifice diameter of 1 mm, an orifice length of 1 mm, and a preheating time of 300 seconds. Since the composition for a bonded magnet of the present embodiment has high fluidity, it is excellent in moldability. Therefore, a bonded magnet having a thin shape or a complicated shape can be easily obtained without post-processing. In addition, an amount of the magnet powder in the composition can be increased while maintaining a high dispersion state. Further, orientation of the magnet powder can be enhanced even when the content is same. In addition, there is no need to perform molding at high temperatures to enhance fluidity. Since low-temperature molding is possible, deterioration of magnetic characteristics of the magnet powder can be suppressed. As a result of the combined action of these, a bonded magnet having excellent magnetic properties, in particular, an anisotropic bonded magnet can be manufactured. The fluidity is desirably high, preferably 2.0 cm³/sec or more, and more preferably 2.5 cm³/sec or more. On the other hand, it is difficult to produce a composition with excessively high fluidity. The fluidity is typically 4.0 cm³/sec or less. The fluidity is preferably 2.0 cm³/sec or more and 4.0 cm³/sec or less, and more preferably 2.5 cm³/sec or more and 4.0 cm³/sec or less.

The composition for a bonded magnet of the present embodiment is preferably produced by mixing a predetermined amount of a polyamide elastomer with its terminal amino group being treated (polyamide elastomer without a terminal amino group) and a predetermined amount of a polyamide elastomer with its terminal amino group being untreated (polyamide elastomer with a terminal amino group) in combination. Specifically, a preferred composition for a bonded magnet of the present embodiment is produced by mixing and kneading: a samarium-iron-nitrogen-based magnet powder having an average particle size of 1.7 µm or more and 2.8 µm or less, in a content of 88.0% by mass or more and 91.0% by mass or less; a polyamide elastomer with a terminal amino group having a tensile elongation at break of 400% or more and a flexural modulus of 100 MPa or more, in a content of 1.0% by mass or more and 2.5% by mass or less; a polyamide elastomer without a terminal amino group having a tensile elongation at break of 400% or more and a flexural modulus of 70 MPa or more, in a content of 2.0% by mass or more and 4.5% by mass or less; a carbon fiber having a fiber diameter of 5 µm or more and 12 µm or less, in a content of 0.5% by mass or more and 2.0% by mass or less; a carboxylic acid ester in a content of 0.3% by mass or more and 1.0% by mass or less; and a polyamide 12 resin having a weight average molecular weight Mw of 4,500 or more and 7,500 or less as determined by a molecular weight distribution measurement, in a content of 1.0% by mass or more and 8.0% by mass or less.

By mixing a predetermined amount of a polyamide elastomer without a terminal amino group and a predetermined amount of a polyamide elastomer with a terminal amino group in combination, a composition for a bonded magnet having excellent fluidity while maintaining durability against the thermal shock test and adhesiveness can be obtained. On the other hand, in the case in which only the polyamide elastomer with a terminal amino group is used, or in the case in which only the polyamide elastomer without a terminal amino group is used, it is difficult to obtain a composition for a bonded magnet having excellent fluidity while maintaining durability against the thermal shock test and adhesiveness.

As described above, in order to obtain the composition for a bonded magnet of the present embodiment, blending a predetermined amount of the polyamide elastomer without a terminal amino group and a predetermined amount of the polyamide elastomer with a terminal amino group in combination is important. However, in the obtained composition for a bonded magnet, it is difficult to distinguish the polyamide elastomer with a terminal amino group and the polyamide elastomer without a terminal amino group from each other and obtain the respective amounts by measurement. Therefore, in the present embodiment, the bonded magnet is specified by using fluidity thereof as an index.

### <<2. Method for Producing Composition for Bonded Magnet>>

In the method for producing the composition for a bonded magnet of the present embodiment, predetermined amounts of a magnet powder, a polyamide elastomer, a polyamide 12 resin, a carbon fiber, a carboxylic acid ester, and, if necessary, a component such as an antioxidant are weighed, and the components are mixed by a mixer such as a stirring mixer and then kneaded by using a kneading apparatus.

Details of the magnet powder, polyamide 12 resin, carbon fiber, carboxylic acid ester, and other components are as described above. That is, a samarium-iron-nitrogen (Sm-Fe-N)-based magnet powder having an average particle size of 1.7 µm or more and 2.8 µm or less is blended at a ratio of 88.0% by mass or more and 91.0% by mass or less. The polyamide 12 resin having a weight average molecular weight Mw of 4,500 or more and 7,500 or less in a molecular weight distribution measurement is blended in a content of 1.0% by mass or more and 8.0% by mass or less. The carbon fiber having a fiber diameter of 5 µm or more and 12 µm or less is blended in a content of 0.5% by mass or more and 2.0% by mass or less. The carboxylic acid ester is blended in a content of 0.3% by mass or more and 1.0% by mass or less. If necessary, components such as an antioxidant, a stabilizer, a pigment, and a compatibilizer may be blended within a range that does not impair the effects of the composition for a bonded magnet.

As the polyamide elastomer, a polyamide elastomer that has a terminal amino group (polyamide elastomer with a terminal amino group) and a polyamide elastomer that does not have a terminal amino group (polyamide elastomer without a terminal amino group) are blended in combination. A typical polyamide elastomer has an amino group at an end thereof. This terminal group (amino group) may interact with the magnet powder in the composition to increase a viscosity of the composition (thickening). By using the polyamide elastomer without a terminal amino group as a part of the polyamide elastomer, interaction with the magnet powder can be suppressed, and the influence of thickening or the like can be suppressed.

As the polyamide elastomer with a terminal amino group, a polyamide elastomer with a terminal amino group having a polyamide segment and a polyether segment can be used. As the polyamide elastomer with a terminal amino group, a polyamide elastomer having a tensile elongation at break of 400% or more and a flexural modulus of 100 MPa or more is preferably used. By using the polyamide elastomer having such a tensile elongation at break and an elastic modulus, the occurrence of cracking in the thermal shock test of the bonded magnet can be effectively prevented.

The blending amount of the polyamide elastomer with a terminal amino group is preferably 1.0% by mass or more and 2.5% by mass or less. When the blending amount is less than 1.0% by mass, cracking easily occurs in the thermal shock test. On the other hand, when the blending amount exceeds 2.5% by mass, the fluidity of the composition for a bonded magnet decreases and molding of the bonded magnet becomes difficult. A polyamide elastomer with a terminal amino group typically has an amino group concentration of greater than 0.2 mgKOH/g.

As the polyamide elastomer without a terminal amino group, a polyamide elastomer without a terminal amino group having a polyamide segment and a polyether segment can be used. As the polyamide without a terminal amino group, a polyamide elastomer having a tensile elongation at break of 400% or more and a flexural modulus of 70 MPa or more is preferably used. By using the polyamide elastomer having such a tensile elongation at break and a flexural modulus, both an effect of improving the fluidity of the composition for a bonded magnet and an effect of suppressing the occurrence of cracking in the thermal shock test of the bonded magnet can be achieved.

The polyamide elastomer without a terminal amino group is preferably blended in a blending amount of 2.0% by mass or more and 4.5% by mass or less. When the blending amount is less than 2.0% by mass, the effect of improving the fluidity is small. On the other hand, when the blending amount exceeds 4.5% by mass, cracking of the bonded magnet easily occurs in the thermal shock test. The polyamide elastomer without a terminal amino group can be obtained by heating a polyamide elastomer with a terminal amino group together with a saturated fatty acid such as stearic acid at about 300°C under an inert gas. The polyamide elastomer without a terminal amino group usually has an amino group concentration of 0.2 mgKOH/g or less.

The form of the thermoplastic resin binder (polyamide elastomer and polyamide 12 resin) added during mixing and kneading is not particularly limited. For example, the thermoplastic resin binder in various forms such as a powder form, a bead form, a pellet form, etc. can be used. Among them, the powder form is preferable from the viewpoint of uniformly mixing with the magnet powder.

The raw materials may be mixed and kneaded by a known method. The kneading apparatus is not particularly limited, and for example, a batch kneader or a continuous extruder can be used. During kneading, it is preferable to control a shearing force applied to the composition during kneading in the kneading apparatus. For example, in the case of using a kneader, the shearing force can be controlled by adjusting conditions such as the temperature, the amount of the raw material fed to the mixing tank, rotation speed of the kneading blade, the kneading time, or the like. In the case of using a continuous extruder, the shearing force can be controlled by adjusting conditions such as the temperature distribution, raw material feeding speed, the shape of a screw segment, screw rotation speed, die hole diameter, or the like.

### <<3. Bonded Magnet>>

The bonded magnet of the present embodiment is a molded body of the above-described composition for a bonded magnet. That is, the bonded magnet is produced by molding the composition for a bonded magnet. Specifically, the bonded magnet is produced by heating and melting the composition for a bonded magnet at a temperature equal to or higher than the melting point of the resin binder, which is a constituent component of the composition, and then molding the obtained melt. The molding may be performed by a known method such as an injection molding method, an extrusion molding method, a compression molding method, or the like. An anisotropic bonded magnet can be obtained by molding in a magnetic field, and an isotropic bonded magnet can be obtained by molding in a nonmagnetic field. Since the polyamide 12 resin is used, the heat melting temperature is preferably in the range of 200°C or higher and 250°C or lower.

Among the above-described molding methods, the bonded magnet is particularly preferably molded by the injection molding method. The injection molding method has a large degree of freedom in the shape of the bonded magnet, which is a molded body, and can produce a bonded magnet with excellent surface properties and excellent magnetic properties. Therefore, the obtained bonded magnet can be incorporated as it is as a part of the electronic component. Since the above-described composition for a bonded magnet has good fluidity and excellent moldability in injection molding, a bonded magnet can be easily molded. In addition, occurrence of appearance defects such as welds, etc. during injection molding can be effectively prevented.

The bonded magnet thus obtained has excellent magnetic properties, has high durability against the thermal shock test, and is less likely to crack. Therefore, the bonded magnet thus obtained is excellent in mechanical strength. This bonded magnet is used in a compact, flat, or complex-shaped article such as a motor component, etc. for electronic devices, for example. In addition, the bonded magnet has features of being capable of mass production, requiring no post-processing, and allowing insert molding. Therefore, the bonded magnet is preferably used particularly for an integrally molded component with a metal material.

The resulting bonded magnet is preferably magnetized before use. For the magnetization, an electromagnet that generates a static magnetic field, a capacitor magnetizer that generates a pulsed magnetic field, or the like is used. Since the magnetizing magnetic field, i.e., the magnetic field strength during magnetizing slightly differs depending on the type of the magnet powder, it is not possible to unambiguously determine the magnetizing magnetic field. For example, it may be set to 1,200 kA/m (15 kOe) or more, and preferably 2,400 kA/m (30 kOe) or more.

### <<4. Integrally Molded Component>>

The integrally molded component of the present embodiment includes the above-described bonded magnet and a metal part. The above-described bonded magnet can be integrated by combining it with a metal part by a method such as adhesion through an adhesive or insert molding, whereby an integrally molded component can be produced. The integrally molded component can be produced by a known method. For example, it can be produced by applying a predetermined adhesive to the bonding surface of the bonded magnet and the bonding surface of the metal part, then performing pressure-bonding, and holding the obtained integrally molded component at room temperature for 12 to 24 hours.

A general bonded magnet material has a linear expansion coefficient different from that of the metal part. Therefore, when an integrally molded component is produced using this bonded magnet material and is subjected to the thermal shock test, cracks are likely to occur in the bonded magnet. In contrast, since the bonded magnet of the present embodiment has excellent mechanical strength, occurrence of cracking of the bonded magnet can be effectively prevented in the integrally molded component. Further, when the bonded magnet of the present embodiment is bonded via an adhesive such as an epoxy-based adhesive, etc. to form an integrally molded component, it is possible to impart an excellent adhesive force to the metal part without weakening the adhesive force.

### EXAMPLES

The present invention will be described in more detail with reference to the following Examples and Comparative Examples. However, the present invention is not limited to the following Examples.

### (1) Preparation of Composition for Bonded Magnet

### <Example 1>

Samarium-iron-nitrogen (Sm-Fe-N; SFN)-based magnet powder (manufactured by Sumitomo Metal Mining) having an average particle diameter of 2.3 µm as a magnet powder, a polyamide 12 resin having a weight average molecular weight Mw of 5,300, a polyamide elastomer with a terminal amino group, a polyamide elastomer without a terminal amino group, a carbon fiber (C fiber) having a fiber diameter of 6 µm as a reinforcing agent, and sebacic acid ester as an additive were weighed so that their proportions were 90.0 mass%, 2.2 mass%, 1.9 mass%, 4.3 mass%, 0.9 mass%, and 0.7 mass%, respectively, mixed in a stirring mixer, and kneaded at 200°C using a continuous extruder to prepare a composition for a bonded magnet. The polyamide elastomer with a terminal amino group had a tensile elongation at break of 530% and a flexural modulus of 130 MPa. The polyamide elastomer without a terminal amino group had a number average molecular weight of 15,000, an amino group concentration of 0.2 mgKOH/g or less, a tensile elongation at break of 400% or more, and a flexural modulus of 70 MPa or more.

Meanwhile, the average particle diameter of the magnet powder was measured as follows. First, a magnet powder was observed using a scanning electron microscope (JEOL, JSM-IT200; SEM) to obtain an SEM image. The observation was performed at 2,000 magnifications or more. Subsequently, image analysis was performed for 1,000 particles in the obtained SEM image to obtain a volume-based particle size distribution. From the obtained particle size distribution, xd50 was determined as an average particle size.
the tensile elongation at break and the flexural modulus of the polyamide elastomer were measured by the method specified in ISO527 and ISO178, respectively. The weight average molecular weight Mw of the polyamide 12 resin refers to a weight average molecular weight obtained by converting a value, which was determined using hexafluoroisopropanol as an eluent and an analytical instrument: RI detector GPC-104 (manufactured by Shoko Scientific), with polymethyl methacrylate.

### <Example 2>

A carbon fiber (C fiber) having a fiber diameter of 11 µm was used as the reinforcing agent. A composition for a bonded magnet was produced in the same manner as in Example 1 except for the above.

### <Example 3>

The blending amounts of the polyamide 12 resin having a weight average molecular weight Mw of 5,300 and the carbon fiber (C fiber) having a fiber diameter of 6 µm as the reinforcing agent were changed to 1.1% by mass and 2.0% by mass, respectively. A composition for a bonded magnet was produced in the same manner as in Example 1 except for the above.

### <Example 4>

The blending amounts of the polyamide 12 resin having a weight average molecular weight Mw of 5,300 and the carbon fiber (C fiber) having a fiber diameter of 6 µm as the reinforcing agent were changed to 2.6% by mass and 0.5% by mass, respectively. A composition for a bonded magnet was produced in the same manner as in Example 1 except for the above.

### <Example 5>

The blending amount of the polyamide 12 resin having a weight average molecular weight Mw of 5,300 and sebacic acid ester as the additive were changed to 1.9% by mass and 1.0% by mass, respectively. A composition for a bonded magnet was produced in the same manner as in Example 1 except for the above.

### <Example 6>

The blending amounts of the polyamide 12 resin having a weight average molecular weight Mw of 5,300 and sebacic acid ester as the additive were changed to 2.6% by mass and 0.3% by mass, respectively. A composition for a bonded magnet was produced in the same manner as in Example 1 except for the above.

### <Example 7>

The blending amounts of the polyamide 12 resin having a weight average molecular weight Mw of 5,300 and the polyamide elastomer without a terminal amino group were changed to 2.0% by mass and 4.5% by mass, respectively. The polyamide elastomer without a terminal amino group had a number average molecular weight of 15,000, an amino group concentration of 0.2 mgKOH/g or less, a tensile elongation at break of 400% or more, and a flexural modulus of 70 MPa or more. A composition for a bonded magnet was produced in the same manner as in Example 1 except for the above.

### <Example 8>

The blending amounts of the polyamide 12 resin having a weight average molecular weight Mw of 5,300 and the polyamide elastomer without a terminal amino group were changed to 4.5% by mass and 2.0% by mass, respectively. The polyamide elastomer without a terminal amino group had a number average molecular weight of 15,000, an amino group concentration of 0.2 mgKOH/g or less, a tensile elongation at break of 400% or more, and a flexural modulus of 70 MPa or more. A composition for a bonded magnet was produced in the same manner as in Example 1 except for the above.

### <Example 9>

The blending amounts of the polyamide 12 resin having a weight average molecular weight Mw of 5,300 and the polyamide elastomer with a terminal amino group were changed to 1.6% by mass and 2.5% by mass, respectively. The polyamide elastomer with a terminal amino group had a tensile elongation at break of 530% and a flexural modulus of 130 MPa. The composition for a bonded magnet was produced in the same manner as in Example 1 except for the above.

### <Example 10>

The blending amounts of the polyamide 12 resin having a weight average molecular weight Mw of 5,300 and the polyamide elastomer with a terminal amino group were changed to 3.1% by mass and 1.0% by mass, respectively. The polyamide elastomer with a terminal amino group had a tensile elongation at break of 530% and a flexural modulus of 130 MPa. A composition for a bonded magnet was produced in the same manner as in Example 1 except for the above.

### <Example 11>

The blending amount of the samarium-iron-nitrogen (Sm-FeN)-based magnet powder (manufactured by Sumitomo Metal Mining) having an average particle diameter of 2.3 µm, which is a magnet powder, was changed to 91.0% by mass, the blending amount of the polyamide 12 resin having a weight average molecular weight Mw of 5,300 was changed to 4.4% by mass, the blending amount of the polyamide elastomer with a terminal amino group was changed to 1.0% by mass, and the blending amount of a polyamide elastomer without a terminal amino group was changed to 2.0% by mass. The polyamide elastomer with a terminal amino group had a tensile elongation at break of 530% and a flexural modulus of 130 MPa. The polyamide elastomer without a terminal amino group had a number average molecular weight of 15,000, an amino group concentration of 0.2 mgKOH/g or less, a tensile elongation at break of 400% or more, and a flexural modulus of 70 MPa or more. A composition for a bonded magnet was produced in the same manner as in Example 1 except for the above.

### <Example 12>

The blending amount of the samarium-iron-nitrogen (Sm-FeN)-based magnet powder (manufactured by Sumitomo Metal Mining) having an average particle diameter of 2.3 µm, which is a magnet powder, was changed to 88.0% by mass, the blending amount of the polyamide 12 resin having a weight average molecular weight Mw of 5,300 was changed to 3.4% by mass, the blending amount of the polyamide elastomer with a terminal amino group was changed to 2.5% by mass, and the blending amount of the polyamide elastomer without a terminal amino group was changed to 4.5% by mass. The polyamide elastomer with a terminal amino group had a tensile elongation at break of 530% and a flexural modulus of 130 MPa. The polyamide elastomer without a terminal amino group had a number average molecular weight of 15,000, an amino group concentration of 0.2 mgKOH/g or less, a tensile elongation at break of 400% or more, and a flexural modulus of 70 MPa or more. A composition for a bonded magnet was produced in the same manner as in Example 1 except for the above.

### <Example 13>

An adipic acid ester was used as the additive. A composition for a bonded magnet was produced in the same manner as in Example 1 except for the above.

### <Comparative Example 1>

The blending amounts of the polyamide 12 resin having a weight average molecular weight Mw of 5,300 and the carbon fiber having a fiber diameter of 6 µm as the reinforcing agent were changed to 0.6% by mass and 2.5% by mass, respectively. A composition for a bonded magnet was produced in the same manner as in Example 1 except for the above.

### <Comparative Example 2>

The blending amounts of the polyamide 12 resin having a weight average molecular weight Mw of 5,300 and the carbon fiber having a fiber diameter of 6 µm as the reinforcing agent were changed to 2.8% by mass and 0.3% by mass, respectively. A composition for a bonded magnet was produced in the same manner as in Example 1 except for the above.

### <Comparative Example 3>

The blending amounts of the polyamide 12 resin having a weight average molecular weight Mw of 5,300 and sebacic acid ester as the additive were changed to 1.7% by mass and 1.2% by mass, respectively. A composition for a bonded magnet was produced in the same manner as in Example 1 except for the above.

### <Comparative Example 4>

The blending amounts of the polyamide 12 resin having a weight average molecular weight Mw of 5,300 and the blending amount of sebacic acid ester as the additive were changed to 2.7% by mass and 0.2% by mass, respectively. A composition for a bonded magnet was produced in the same manner as in Example 1 except for the above.

### <Comparative Example 5>

The blending amounts of the polyamide 12 resin having a weight average molecular weight Mw of 5,300 and the polyamide elastomer without a terminal amino group were changed to 4.7% by mass and 1.8% by mass, respectively. The polyamide elastomer without a terminal amino group had a number average molecular weight of 15,000, an amino group concentration of 0.2 mgKOH/g or less, a tensile elongation at break of 400% or more, and a flexural modulus of 70 MPa or more. A composition for a bonded magnet was produced in the same manner as in Example 1 except for the above.

### <Comparative Example 6>

The blending amounts of the polyamide 12 resin having a weight average molecular weight Mw of 5,300 and the polyamide elastomer with a terminal amino group were changed to 1.1% by mass and 3.0% by mass, respectively. The polyamide elastomer with a terminal amino group had a tensile elongation at break of 530% and a flexural modulus of 130 MPa. A composition for a bonded magnet was produced in the same manner as in Example 1 except for the above.

### <Comparative Example 7>

The blending amounts of the samarium-iron-nitrogen (Sm-FeN)-based magnet powder (manufactured by Sumitomo Metal Mining) having an average particle diameter of 2.3 µm, which is a magnet powder, and the polyamide 12 resin having a weight average molecular weight Mw of 5,300 were changed to 91.3% by mass and 0.9% by mass, respectively. A composition for a bonded magnet was produced in the same manner as in Example 1 except for the above.

### <Comparative Example 8>

The samarium-iron-nitrogen (Sm-Fe-N)-based magnet powder having an average particle diameter of 2.3 µm manufactured by Sumitomo Metal Mining as the magnet powder, in a content of 90.0% by mass, the polyamide 12 resin having a weight average molecular weight Mw of 5,300, in a content of 6.2% by mass, the polyamide elastomer with a terminal amino group having a tensile elongation at break of 530%, and a flexural modulus of 130 MPa, in a content of 2.0% by mass, the carbon fiber (C fiber) having a fiber diameter of 11 µm as the reinforcing agent, in a content of 1.0% by mass, and sebacic acid ester as the additive, in a content of 0.8% by mass were mixed in a stirring mixer and kneaded at 200°C using a continuous extruder to obtain a composition for a bonded magnet.

### (2) Evaluation

Various properties of the compositions for a bonded magnet obtained in Examples 1 to 13 and Comparative Examples 1 to 8 were evaluated as follows.

### <Fluidity>

The fluidity of the bonded magnet composition was measured using a melt indexer flow tester (Shimadzu Corporation, CTF-100D). The measurement was performed under the conditions of a capillary temperature of 250°C, a load of 588 N, an orifice diameter of 1 mm, an orifice length of 1 mm, and a preheating time of 300 seconds.

### <Thermal Shock Test Durability (Heat Shock)>

The composition for a bonded magnet was subjected to injection molding to produce a ring-shaped bonded magnet, and the thermal shock test durability of the obtained bonded magnet was evaluated. The injection molding was performed under the conditions of a molding temperature of 240°C and four pinpoint gates. The obtained bonded magnet had dimensions of an outer diameter of 32 **mm,** an inner diameter of 30 **mm,** and a height of **20 mm.** Next, the obtained bonded magnet was bonded to an inner side of an iron ring having an outer diameter of 34 **mm,** an inner diameter of 32 **mm,** and a height of 22 **mm,** using an epoxy resin to prepare an integrally molded component.

The obtained integrally molded component was held at room temperature for 24 hours, and then, was subjected to the thermal shock test with one cycle of -40°C for 30 minutes to +90°C for 30 minutes. After 300 cycles and 600 cycles, the bonded magnet of the integrally molded component was observed with an optical microscope at 20 magnifications, to check whether or not defects such as cracking occurred in the bonded magnet. The evaluation was performed for 10 test samples and the thermal shock test durability (heat shock) was judged according to the following criteria.
"A": The number of defects formed after 600 cycles was 0.
"B": the number of defects formed after 300 cycles was 0, but the number of defects formed after 600 cycles was 1 or more.
"C": The number of defects formed after 300 cycles was 1 or more.

### <Adhesive Strength (Adhesiveness)>

For the integrally molded component evaluated in the above-described thermal shock test (600 cycles), the bonded magnet bonded to the iron ring was pulled out using an iron shaft having a diameter of 31.5 mm, to thereby measure the adhesive strength. The measurement was performed for 10 test samples, and the average value thereof was determined, to judge the adhesiveness according to the following criteria.
"A": the average value of the adhesive strength is 1,000 N or more.
"C": the average value of the adhesive strength is less than 1,000 N.

### (3) Evaluation Results

The evaluation results obtained for Examples 1 to 13 and Comparative Examples 1 to 8 are shown in Tables 1 and 2 below.

As shown in Table 1, the composition for a bonded magnet of Example 1 had a very high fluidity of 2.5 cm³/sec. In addition, in the thermal shock test, the number of defects formed was 0 even after 600 cycles, and the composition for a bonded magnet of Example 1 was found to have excellent durability. Further, the composition for a bonded magnet of Example 1 had an adhesion strength to the iron ring of 1,000 N or more, and was found to have extremely excellent adhesiveness to the metal part.

The compositions for a bonded magnet of Examples 2 to 13 had high fluidity of 1.5 cm³/g or more. In particular, the composition for a bonded magnet of Example 10 had a very high fluidity of 3.0 cm³/g. In addition, the number of defects was 0 even after 300 cycles in the thermal shock test. Further, the adhesion strength to the iron ring was 1,000 N or more.

On the other hand, as shown in Table 2, the compositions for a bonded magnet of Comparative Examples 1 and 5 to 8 had low fluidity of 1.4 cm³/sec or less. In addition, the bonded magnets obtained from the compositions for a bonded magnet of Comparative Examples 2 and 3 had insufficient reinforcement strengthening and cracking occurred in the thermal shock tests. The composition for a bonded magnet of Comparative Example 4 had a high fluidity of 2.0 cm³/g, but the adhesive force between the obtained bonded magnet and the iron ring was low, and a sample having an adhesive force of 1,000 N or more could not be obtained.

**<Table 1-1>**

| Table 1 Raw material blending proportion when producing composition for bonded magnet and evaluation results | | | | | | | | | | | | | |
|---|---|---|---|---|---|---|---|---|---|---|---|---|---|
| | Example 1 | Example 2 | Example 3 | Example 4 | Example 5 | Example 6 | Example 7 | Example 8 | Example 9 | Example 10 | Example 11 | Example 12 | Example 13 |
| SFN | 90.0% | 90.0% | 90.0% | 90.0% | 90.0% | 90.0% | 90.0% | 90.0% | 90.0% | 90.0% | 91.0% | 88.0% | 90.0% |
| Polyamide resin | 2.2% | 2.2% | 1.1% | 2.6% | 1.9% | 2.6% | 2.0% | 4.5% | 1.6% | 3.1% | 4.4% | 3.4% | 2.2% |
| Polyamide elastomer with a terminal amino group | 1.9% | 1.9% | 1.9% | 1.9% | 1.9% | 1.9% | 1.9% | 1.9% | 2.5% | 1.0% | 1.0% | 2.5% | 1.9% |
| Polyamide elastomer without a terminal amino group | 4.3% | 4.3% | 4.3% | 4.3% | 4.3% | 4.3% | 4.5% | 2.0% | 4.3% | 4.3% | 2.0% | 4.5% | 4.3% |
| Reinforcing agent | 0.5% | 0.9% | 2.0% | 0.5% | 0,9% | 0.9% | 0.9% | 0.9% | 0.9% | 0.9% | 0.9% | 0.9% | 0.9% |

**<Table 1-2>**

| | | | | | | | | | | | | | |
|---|---|---|---|---|---|---|---|---|---|---|---|---|---|
| Additive | 0.7% | 0.7% | 0.7% | 0.7% | 1.0% | 0.3% | 0.7% | 0.7% | 0.7% | 0,7% | 0.7% | 0.7% | 0.7% |
| Total | 100.0% | 100.0% | 100.0% | 100.0% | 100.0% | 100.0% | 100.0% | 100.0% | 100.0% | 100.0% | 100.0% | 100.0% | 100.0% |
| Reinforcing agent | C fiber φ6µ | C fiber φ11µm | C fiber φ6µm | C fiber φ6µm | C fiber φ6µm | C fiber φ6µm | C fiber φ6µm | C fiber φ6µm | C fiber φ6µm | C fiber φ6µm | C fiber φ6µm | C fiber φ6µm | C fiber φ6µm |
| Additive | Sebacic acid ester | Sebacic acid ester | Sebacic acid ester | Sebacic acid ester | Sebacic acid ester | Sebacic acid ester | Sebacic acid ester | Sebacic acid ester | Sebacic acid ester | Sebacic acid ester | Sebacic acid ester | Sebacic acid ester | Adipic acid ester |
| Fluidity (cm³/sec) | 2.5 | 2.6 | 1.5 | 2.8 | 2.7 | 2.1 | 2.7 | 1.8 | 1.9 | 3.0 | 1.6 | 2.9 | 2.6 |
| Heat shock | ⊚ | 0 | ⊚ | 0 | 0 | 0 | 0 | 0 | 0 | 0 | 0 | ⊚ | ⊚ |
| Adhesiveness | ⊚ | ⊚ | ⊚ | ⊚ | ⊚ | ⊚ | ⊚ | ⊚ | ⊚ | ⊚ | ⊚ | ⊚ | ⊚ |

**<Table 2-1>**

| Table 2 Raw material blending proportion when producing composition for bonded magnet and evaluation results | | | | | | | | |
|---|---|---|---|---|---|---|---|---|
| | Comparati ve Example 1 | Comparati ve Example 2 | Comparati ve Example 3 | Comparati ve Example 4 | Comparati ve Example 5 | Comparati ve Example 6 | Comparati ve Example 7 | Comparati ve Example 8 |
| SFN | 90.0% | 90.0% | 90.0% | 90.0% | 90.0% | 90.0% | 91.3% | 90.0% |
| Polyamide resin | 0.6% | 2.8% | 1.7% | 2.7% | 4.7% | 1.1% | 0.9% | 6.2% |
| Polyamide elastomer with a terminal amino group | 1.9% | 1.9% | 1.9% | 1.9% | 1.9% | 3.0% | 1.9% | 2.0% |
| Polyamide elastomer without a terminal amino group | 4.3% | 4.3% | 4.3% | 4.3% | 1.8% | 4.3% | 4.3% | 0.0% |
| Reinforcing agent | 2.5% | 0.3% | 0.9% | 0.9% | 0.9% | 0.9% | 0.9% | 1.0% |

**<Table 2-2>**

| | | | | | | | | |
|---|---|---|---|---|---|---|---|---|
| Additive | 0.7% | 0.7% | 1.2% | 0.2% | 0.7% | 0.7% | 0.7% | 0.8% |
| Total | 100.0% | 100.0% | 100.0% | 100.0% | 100.0% | 100.0% | 100.0% | 100.0% |
| Reinforcing agent | C fiber φ6µm | C fiber φ6µm | C fiber φ6µm | C fiber φ6µm | C fiber φ6µm | C fiber φ6µm | C fiber φ6µm | C fiber φ11µm |
| Additive | Sebacic acid ester | Sebacic acid ester | Sebacic acid ester | Sebacic acid ester | Sebacic acid ester | Sebacic acid ester | Sebacic acid ester | Sebacic acid ester |
| Fluidity (cm³/sec) | 1.2 | 3.0 | 3.1 | 2.0 | 1.1 | 1.4 | 1.1 | 0.7 |
| Heat shock | ⊚ | × | × | ⊚ | ⊚ | ○ | ○ | ⊚ |
| Adhesiveness | ⊚ | ⊚ | ⊚ | × | ⊚ | ⊚ | ⊚ | ⊚ |

From the above results, it can be understood that the composition for a bonded magnet of the present embodiment has higher fluidity than conventional ones while maintaining durability against the thermal shock test and adhesiveness.

### INDUSTRIAL APPLICABILITY

The composition for a bonded magnet of the present embodiment has high fluidity during molding, and the resulting bonded magnet exhibits excellent durability in the thermal shock test. Further, the composition for a bonded magnet can impart excellent adhesiveness to the bonded magnet that is to be glued to a metal part or the like by using an adhesive. Therefore, the composition for a bonded magnet of the present invention is extremely useful as a composition for producing a bonded magnet. The bonded magnet obtained from this composition for a bonded magnet can be used for, for example, a compact, flat, or complex-shaped component such as a motor component for electronic devices. Moreover, this bonded magnet can be mass-produced. In addition, this bonded magnet has a feature of requiring no post-processing and allowing insert molding. In particular, the bonded magnet of the present invention can be suitably used as a molded part to be combined with a metal part.

## Claims

1. A composition for a bonded magnet, comprising:
a samarium-iron-nitrogen-based magnet powder having an average particle size of 1.7 µm or more and 2.8 µm or less, in a content of 88.0% by mass or more and 91.0% by mass or less,
a polyamide elastomer having a tensile elongation at break of 400% or more and a flexural modulus of 70 MPa or more, in a content of 3.0% by mass or more and 7.0% by mass or less,
a carbon fiber having a fiber diameter of 5 µm or more and 12 µm or less, in a content of 0.5% by mass or more and 2.0% by mass or less,
a carboxylic acid ester in a content of 0.3% by mass or more and 1.0% by mass or less; and
a polyamide 12 resin having a weight average molecular weight Mw of 4,500 or more and 7,500 or less in a molecular weight distribution measurement, in a content of 1.0% by mass or more and 8.0% by mass or less,
wherein the composition for a bonded magnet has a fluidity of 1.5 cm³/sec or more as measured using a flow tester under conditions of a capillary temperature of 250°C, a load of 588 N, an orifice diameter of 1 mm, an orifice length of 1 mm, and a preheating time of 300 seconds.

2. The composition for a bonded magnet according to claim 1, wherein the fluidity is 2.0 cm³/sec or more.

3. The composition for a bonded magnet according to claim 1 or 2, wherein the samarium-iron-nitrogen-based magnet powder has a composition represented by Sm₂Fe₁₇N₃.

4. A bonded magnet that is a molded body of the composition for a bonded magnet according to claim 1 or 2.

5. An integrally molded component comprising the bonded magnet according to claim 4 and a metal part.
